(19) Europäisches Patentamt / European Patent Office / Office européen des brevets

(11) **EP 3 622 830 A1**

(12) **EUROPEAN PATENT APPLICATION**
published in accordance with Art. 153(4) EPC

(43) Date of publication:
**18.03.2020 Bulletin 2020/12**

(51) Int Cl.:
***A23L 7/109*** *(2016.01)*

(21) Application number: **18798231.9**

(22) Date of filing: **11.05.2018**

(86) International application number:
**PCT/JP2018/018319**

(87) International publication number:
**WO 2018/207912 (15.11.2018 Gazette 2018/46)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **12.05.2017 JP 2017095807**

(71) Applicant: **Nisshin Foods Inc.**
**Tokyo 101-8441 (JP)**

(72) Inventors:
• **KIMURA Ryusuke**
**Fujimino-city**
**Saitama 356-8511 (JP)**

• **FUJII Tomoyuki**
**Fujimino-city**
**Saitama 356-8511 (JP)**
• **ASAHINA Kenta**
**Fujimino-city**
**Saitama 356-8511 (JP)**
• **HIGASHI Masafumi**
**Fujimino-city**
**Saitama 356-8511 (JP)**

(74) Representative: **Casalonga**
**Casalonga & Partners**
**Bayerstraße 71/73**
**80335 München (DE)**

(54) **GROOVED NOODLE, GROOVED NOODLE PRODUCTION METHOD, AND GROOVED NOODLE COOKING METHOD**

(57)    It is an object of the present invention to provide a grooved noodle which hardly sticks to another noodle after boiling and from which a boiled noodle having excellent texture is obtained. It is also an object of the present invention to provide a method for producing a grooved noodle and a method for cooking a grooved noodle. The grooved noodle of the present invention is a grooved noodle having a groove or a plurality of grooves formed along a longitudinal direction of a noodle string and having a substantially circular configuration in cross section of the noodle string, wherein only grain flour including wheat flour is used as raw material flour, and a gluten vitality of the grooved noodle is 18% to 35%.

**Description**

TECHNICAL FIELD

The present invention relates to a grooved noodle, a method for producing a grooved noodle, and a method for cooking a grooved noodle.

BACKGROUND ART

Conventionally, there has been proposed a noodle having a groove formed along a longitudinal direction of a noodle string for the purpose of achieving a shortened cooking time (boiling time) when a noodle is put in boiled water to obtain a boiled noodle. For example, Patent Literature 1 describes "a spaghetti noodle having a groove formed in a longitudinal direction of a noodle string, the groove functioning to allow the spaghetti noodle to be quickly boiled in a good texture state slightly leaving a half-boiled core portion and allow the boiled spaghetti noodle to have an approximately circular shape in cross section."

CITATION LIST

PATENT LITERATURE

Patent Literature 1: JP 2001-17104 A

SUMMARY OF INVENTION

TECHNICAL PROBLEMS

The present inventors have examined the texture of the boiled noodles obtained by cooking, under various conditions, the spaghetti noodles each having a groove formed in the longitudinal direction of the noodle string as described in Patent Literature 1, and found that there is a problem that the boiled noodles sometimes stick to each other depending on the cooking condition.
Therefore, it is an object of the present invention to provide a grooved noodle which hardly sticks to another noodle after boiling and from which a boiled noodle having excellent texture is obtained. It is also an object of the present invention to provide a method for producing a grooved noodle and a method for cooking a grooved noodle.

SOLUTION TO PROBLEMS

The present inventors have made intensive studies to achieve the above objects and found that the above objects can be attained by the following constitutions.

[1] A grooved noodle having a groove or a plurality of grooves formed along a longitudinal direction of a noodle string and having a substantially circular configuration in cross section of the noodle string, wherein only grain flour including wheat flour is used as raw material flour, and a gluten vitality of the grooved noodle is 18% to 35%.
[2] The grooved noodle according to [1], wherein the number of the grooves is 2 to 8.
[3] The grooved noodle according to [1] or [2], wherein a ratio of an area of a cross-sectional area of the groove or the plurality of grooves to a cross-sectional area of the configuration in cross section in a direction orthogonal to the longitudinal direction of the noodle string is 0.25 to 0.50.
[4] A method for producing the grooved noodle according to any one of [1] to [3], including: a forming step of obtaining, from dough made from only grain flour including wheat flour as a raw material, a grooved raw noodle having a groove or a plurality of grooves formed along a longitudinal direction of a noodle string and having a substantially circular configuration in cross section of the noodle string; and a heating step of heating the grooved raw noodle to obtain a grooved noodle whose gluten vitality is 18% to 35%.
[5] The method for producing the grooved noodle according to [4], further including a step of adjusting a water content of the grooved raw noodle before the heating step.
[6] The method for producing the grooved noodle according to [5], wherein the step of adjusting the water content includes a drying step.
[7] A method for cooking a grooved noodle, including: putting the grooved noodle according to any one of [1] to [3] and water in a container; and heating the grooved noodle and the water with microwaves to obtain a boiled noodle.
[8] The method for cooking a grooved noodle according to [7], wherein a temperature of the water is 0°C to 40°C.

ADVANTAGEOUS EFFECTS OF INVENTION

According to the present invention, it is possible to provide a grooved noodle which hardly sticks to another noodle after boiling and from which a boiled noodle having excellent texture is obtained (hereinafter, also referred to as "having the effect of the present invention"). According to the present invention, it is also possible to provide a method for producing a grooved noodle and a method for cooking a grooved noodle.

DESCRIPTION OF EMBODIMENTS

The present invention is described in detail below.

The description of the constituent elements below is made based on representative embodiments of the present invention, but the present invention is not limited to such embodiments.

In the present description, the numerical ranges indicated by using "to" mean ranges including numerical values described before and after "to" as their lower limit values and upper limit values.

A grooved noodle according to an embodiment of the present invention is a grooved noodle having a groove or a plurality of grooves formed along a longitudinal direction of a noodle string and having a substantially circular configuration in cross section of the noodle string, wherein only grain flour including wheat flour is used as raw material flour, and a gluten vitality of the grooved noodle is 18% to 35%.

Although the reasons why the objects of the present invention are attained by the above grooved noodle are not necessarily clear, the present inventors presume the mechanism which is described below. The scope of the present invention is, however, not limited by the presumed mechanism described below. In other words, even if the effect of the present invention is obtained with a mechanism other than the presumed mechanism described below, this case is still encompassed by the scope of the present invention.

The present inventors have cooked, under various conditions, grooved noodles each having a groove or a plurality of grooves formed along a longitudinal direction of a noodle string and having a substantially circular configuration in cross section of the noodle string (hereinafter, simply referred to as "grooved noodle(s)") and found that when the grooved noodles are cooked under a special condition, the grooved noodles sometimes stick to each other after boiling; they have intensely examined the reasons thereof.

Conventionally, there has been known a method for cooking a grooved noodle involving putting grooved noodles in a sufficient amount of boiling water and boiling the grooved noodles for a predetermined time (for example, about 10 minutes).

The present inventors have found that when the grooved noodles are cooked under a condition where convection of water hardly occurs, such as using a small amount of water or a small amount of boiling water, the grooved noodles sometimes stick to each other after boiling. The present inventors have also found that the grooved noodles more easily stick to each other after boiling by a method in which the grooved noodles are put in water at normal temperatures (0°C to 40°C) and then heated, and a method in which the grooved noodles and water are put in a container and then heated with microwaves (for example, a method using a microwave oven).

One of possible reasons for the above is that when the grooved noodles are cooked under the condition where convection of water hardly occurs, starch dissolved from the surfaces of the grooved noodles tends to remain on the surfaces of the grooved noodles, so that the grooved noodles stick to each other after boiling by the starch thus dissolved. The above problem has occurred probably because the grooved noodle has a larger surface area per unit weight and starch is dissolved more easily than a noodle having circular cross section without any groove.

With the method in which the grooved noodles are put in water at normal temperature and then heated and the method in which the grooved noodles and water are put in a container and heated with microwaves, probably, starch is easily dissolved before convection of water occurs, and the starch thus dissolved tends to remain on the surfaces of the grooved noodles, and as a result, the grooved noodles more easily stick to each other after boiling.

One of the features of the grooved noodle according to the embodiment of the present invention is that only grained flour including wheat flour is used as raw material flour and a gluten vitality (hereinafter, also referred to as "GV," the definition and the like of which will be described below) of the grooved noodle is 18% to 35%.

When GV is not less than 18%, a boiled noodle having excellent texture is obtained.

On the other hand, when GV is not more than 35%, protein in wheat flour is sufficiently denatured and the hydrophobicity of the surface of the grooved noodle is enhanced, so the grooved noodle hardly sticks to another noodle after boiling.

Because the grooved noodle having more excellent effect of the present invention can be obtained, GV is preferably not less than 20%, and more preferably not less than 22%, and preferably not more than 32%, and more preferably not more than 29%.

In the present description, GV of the grooved noodle represents a value measured as described below using a sample obtained by pulverizing the grooved noodle (hereinafter, also referred to as "pulverized powder").

[Measuring method of GV]

(1) Measurement of soluble crude protein content of pulverized powder:

(a) 2 g of the pulverized powder is precisely weighed and put in a 100 mL volume beaker.

(b) 40 mL of 0.05N acetic acid is added in the above beaker and the resulting mixture is stirred at room temperature for 60 minutes to prepare a suspension.

(c) The suspension obtained in the above (b) is transferred to a centrifuge tube and centrifuged at 5,000 rpm for 5 minutes, and then filtered using a filter paper to recover a filtrate.

(d) The beaker used above is rinsed with 40 mL of 0.05N acetic acid, and a rinsing liquid is transferred to a centrifuge tube and centrifuged at 5,000 rpm for 5 minutes, and then filtered using a filter paper to recover a filtrate.

(e) The filtrates recovered in the above (c) and (d) are combined together and diluted to 100 mL.

(f) 25 mL of the liquid obtained in the above (e) is put in a Kjeldahl tube in the Kjeltec Autosystem manufactured by Tecator Co., Ltd. (Sweden) using a whole pipette, and then one tablet of the decomposition promoter ("KJELTABS-C" manufactured by Nippon General Co., Ltd.; sulfate potassium : copper sulfate = 9 : 1 (weight ratio)) and 15 mL of concentrated sulfuric acid are added.

(g) Using a Kjeltec decomposition furnace (DIGESTION SYSTEM 20 1015 type) incorporated in the above Kjeltec Autosystem, decomposition is performed with dial 4 for one hour and then automatically performed with dial 9 or 10 for one hour. Following the decomposition, the decomposed liquid is continuously and automatically distilled and titrated using the Kjeltec Distillation and Titration System (KJELTEC AUTO 1030 type) incorporated in the same Kjeltec Autosystem (using 0.1N sulfuric acid for titration). The soluble crude protein content of the pulverized powder is calculated according to the following equation.

(Equation 1)

$$\text{Soluble crude protein content (\%)} = 0.14 \times T \times F \times N \times (100/S) \times (1/25)$$

where

T = Amount of 0.1N sulfuric acid required for titration (mL),

F = Titer of 0.1N sulfuric acid used for titration (as determined on use; or a commercially available product with titer indication may be used),

N = Nitrogen protein conversion factor (5.70),

S = Weighed amount of pulverized powder (g).

(2) Measurement of whole crude protein content of pulverized powder:

(a) 0.5 g of the pulverized powder is precisely weighed and put in the same Kjeldahl tube in the Kjeltec Autosystem manufactured by Tecator Co., Ltd. as used in the above (1), and one tablet of the same decomposition promoter as used in the above (f) of (1) and 5 mL of concentrated sulfuric acid are added.

(b) Using the same Kjeltec decomposition furnace in the Kjeltec Autosystem as used in the above (1), decomposition is performed with dial 9 or 10 for one hour. Following the decomposition, the decomposed liquid is continuously and automatically distilled and titrated using the same Kjeltec Distillation and Titration System as used in the above (1) incorporated in the same Kjeltec Autosystem (using 0.1N sulfuric acid for titration). The whole crude protein content of the pulverized powder is calculated according to the following equation.

(Equation 2)

Whole crude protein content (%) = (0.14 × T × F × N)/S

where

T = Amount of 0.1N sulfuric acid required for titration (mL),
F = Titer of 0.1N sulfuric acid used for titration (as determined on use),
N = Nitrogen protein conversion factor (5.70),
S = Weighed amount of pulverized powder (g).

(3) Calculation of GV:
GV of the pulverized powder is calculated from the soluble crude protein content of the pulverized powder determined in the above (1) and the whole crude protein content of the pulverized powder determined in the above (2) according to the following equation.

(Equation 3)

GV (%) = (soluble crude protein content / whole crude protein content) × 100

GV is an index indicating properties of protein included in wheat flour and is different from the content of protein included in wheat flour and/or raw material flour.

When wheat flour is used as a sample instead of pulverized powder, GV thereof is generally 50% to 60%, and GV of a typical noodle (e.g., spaghetti) is about 40% to about 46%.

For the above grooved noodle, only grain flour including wheat flour is used as raw material flour. The "only grain flour" means that the raw material flour is substantially composed of the grain flour, and the "substantially" means that materials other than the grain flour are allowed to be mixed unintentionally in a manufacturing process of the grain flour from a grain flour raw material and/or a distribution process.

The grain flour content of the raw material flour is not particularly limited, and is generally preferably not less than 99% by weight with respect to the total weight of the raw material flour.

The raw material flour contains wheat flour. Any wheat flour generally used as a raw material of a noodle can be used without any particular restriction, and examples thereof include weak flour, medium-strength flour, strong flour and durum flour. The wheat flour content of the raw material flour is not particularly limited and generally preferably not less than 50% by weight, and more preferably not less than 60% by weight with respect to the total weight of the raw material flour. The upper limit thereof is not particularly limited and is for example 100% by weight.

One kind of wheat flour may be used alone or two or more kinds thereof may be used in combination. When two or more kinds of wheat flour are used in combination, the total content thereof preferably falls within the above range.

The raw material flour may contain, as grain flour other than wheat flour, for example, buckwheat flour, rice flour, corn flour, barley flour, rye flour, Job's-tears flour, Japanese barnyard millet flour and foxtail millet flour.

The shape of the above grooved noodle is not particularly limited as long as the grooved noodle has a groove or a plurality of grooves formed along the longitudinal direction of the noodle string and has a substantially circular configuration in cross section of the noodle string.

Above all, the number of the grooves is preferably 2 to 8 because a boiled noodle having excellent texture can be obtained more easily (in a short boiling time).

In the present description, the configuration of the noodle string means the shape of the cross section of the noodle string when the noodle has no groove.

Above all, because more excellent effect of the present invention can be achieved, the area ratio ($A_1/A_0$) of the cross-sectional area ($A_1$) of a groove or a plurality of grooves to the cross-sectional area $A_0$ of the configuration (the cross-sectional area when the noodle has no groove) in the cross section in the direction orthogonal to the longitudinal direction of the noodle string (the cross section that allows easy observation of the groove(s)) is preferably 0.25 to 0.50, and more preferably 0.32 to 0.42.

When a plurality of grooves are formed along the longitudinal direction of the noodle string, the above $A_1$ means

the total of the cross-sectional areas of the plurality of grooves.

In the present description, $A_1/A_0$ represents an arithmetic mean of the area ratios obtained by observing three cross sections of each of five noodle strings using a fluorescent microscope and performing image processing.

A method for producing the grooved noodle according to the embodiment of the present invention is described.

A first embodiment of the method for producing the grooved noodle according to the embodiment of the present invention is a method involving forming a grooved raw noodle by a conventional method using flour obtained by heating raw material flour (whose GV is generally 50% to 60%) to adjust GV (hereinafter, also referred to as "heated raw material flour") and drying the above grooved raw noodle, thereby producing a grooved noodle.

The heated raw material flour is flour obtained by heating the raw material flour to denature gluten and adjust GV. A known method can be used as a heating method, devices such as an oven, an autoclave and a heater can be used, and the heating temperature and the heating time of the raw material flour can appropriately be adjusted so that GV of the grooved noodle falls within the desired range.

Examples of the method for forming a grooved noodle using the heated raw material flour include a method involving adding kneading water to the heated raw material flour and kneading the resulting mixture to form dough and extruding a raw noodle string from the dough.

As the kneading water, various types of waters which may be used for producing a conventional noodle are applicable, and fresh water, acidic water, alkaline water, salt water and the like can be appropriately used. Also for the amount of the kneading water, an amount which may be used for producing a conventional noodle is applicable and is generally 20 to 30 parts by weight with respect to 100 parts by weight of the heated raw material flour.

The dough may be formed by a conventional method by adding the kneading water to the heated raw material flour, and may be formed by kneading the resulting mixture by hand or a mixer. The method for forming a raw noodle string from the dough may also be performed by a conventional method and examples thereof include a method involving rolling the dough to produce a raw noodle band and then cutting the band to produce a raw noodle string, and a method involving extruding the dough from a die to produce a raw noodle string.

The noodle string (raw noodle string) produced as above generally contains 22% to 30% of water and in order to improve preservability, it is preferable that the noodle string is dried so that the water content becomes not more than 14%. Also for drying, processing performed in production of a conventional noodle string can be applied.

A second embodiment of the method for producing the grooved noodle according to the embodiment of the present invention is a method in which conventional raw material flour is used instead of the heated raw material flour, and further, when dough is formed, dough having been kneaded is once pulverized, and kneaded to form dough again (except the above, this method is the same as the method for producing the grooved noodle according to the first embodiment as already described).

According to the above method for producing the grooved noodle, gluten generated by kneading the dough is physically destroyed by pulverizing the dough, so GV can be adjusted to be within the desired range. The dough can be pulverized in a conventional manner and may be pulverized after being dried as necessary. The gluten can be lowered by pulverizing the dough to a particle diameter of approximately not more than 0.5 mm. Dough can be formed again by adding water properly to the pulverized dough as necessary and kneading the mixture again.

A third embodiment of the method for producing the grooved noodle according to the embodiment of the present invention has the steps stated below. According to the method for producing the grooved noodle having the steps stated below, the grooved noodle can be produced more easily.

- A forming step of obtaining, from dough made from only grain flour including wheat flour as a raw material, a grooved raw noodle having a groove or a plurality of grooves formed along a longitudinal direction of a noodle string and having a substantially circular configuration in cross section of the noodle string
- A heating step of heating the grooved raw noodle to obtain a grooved noodle whose gluten vitality is 18% to 35%

The forming step is a step of obtaining, from dough made from only grain flour including wheat flour as a raw material, a grooved raw noodle having a groove or a plurality of grooves formed along the longitudinal direction of the noodle string and having a substantially circular configuration in cross section of the noodle string. The methods for forming dough and a grooved raw noodle are as already described as the method for producing the grooved noodle according to the first embodiment.

The heating step is a step of heating the grooved raw noodle obtained in the forming step to obtain a grooved noodle whose GV is 18% to 35%.

The method for heating the grooved raw noodle is not particularly limited and a known method can be used. A grooved raw noodle can be heated using devices such as an oven, an autoclave, and a heater. The heating temperature and the heating time are not particularly limited and can be appropriately adjusted depending on GV of the raw material flour so that GV of the obtained grooved noodle becomes a desired value.

The above method for producing the grooved noodle may further have a step of adjusting the water content of the grooved raw noodle along with or before the above heating step. The method for adjusting the water content of the grooved raw noodle is not particularly limited, and a known method can be used. One example of the method is a method involving leaving a raw noodle as it is in an atmosphere in which humidity is adjusted. The above step of adjusting the water content may further have a drying step. When the water content is adjusted, a grooved raw noodle may be heated (the water content may be adjusted along with the heating step).

The method for cooking the grooved noodles according to the embodiment of the present invention to obtain boiled noodles is not particularly limited, and boiled noodles having excellent texture can be obtained by, for example, putting the grooved noodles according to the above embodiment in a sufficient amount of boiling water and boiling the grooved noodles.

Above all, because boiled noodles can be obtained very easily, a method in which the above grooved noodles and water are put in a container and heated with microwaves is preferable.

Since the above grooved noodles have the features as already described, even when the noodles are heated with microwaves and convection of water is little, the noodles which hardly stick to each other, and boiled noodles having excellent texture are obtained.

The container is not particularly limited as long as it can contain the grooved noodles and water, and a known container which is usable for heating the grooved noodles contained therein can be heated with microwaves can be used. For example, the container described in paragraphs 0026 to 0034 of JP 2011-162200 A can be used as the container, and the contents described in the above are incorporated herein.

Water may be added to such a degree that the grooved noodles are sufficiently immersed. The water temperature is not particularly limited and is preferably 0°C to 40°C, more preferably 25°C to 40°C because boiled noodles can be obtained more easily.

The method for heating the grooved noodles with microwaves is not particularly limited and examples thereof include a method using a microwave oven. When a microwave oven is used, it suffices if the grooved noodles and water are put in a container, and the container is put and heated in the microwave oven. Since the grooved noodles of the present invention have the above features, they can be cooked in a short time. Since GV falls within the predetermined range, the boiled noodles which hardly stick to each other after boiling and have excellent texture are obtained.

EXAMPLES

Examples are shown below, but the present invention is not limited to these examples.

• Examples 1 to 6 and Comparative Example 1 to 3

Dough was obtained by mixing 26 parts by weight of water with respect to 100 parts by weight of durum semolina and kneading the resulting mixture. Next, a die having through-holes corresponding to the shape of each type of grooved noodle formed with three grooves and having a substantially circular configuration in cross section of the noodle string, with which shape $A_1/A_0$ became the relevant value shown in Table 1, was attached to a pasta machine, from which the dough kneaded was extruded under a reduced pressure of -600 mmHg to form raw noodles. Next, the raw noodles were dried by a conventional method to thereby produce dried spaghetti noodles having a length of 22 cm. Next, the dried spaghetti noodles were heated in a thermostatic oven. The heating time (2 to 5 hours) and the heating temperature (75°C to 100°C) were each adjusted so that GV became a value as shown in Table 1 (for example, at 100°C for 3 hours in Example 1, and at 78°C for 3 hours in Example 7). Thus, the dried spaghetti noodles of each Examples and Comparative Examples were obtained.

Spaghetti noodles which were not heated after drying were produced as Comparative Example 3.

• Example 7

Dough was obtained by mixing 26 parts by weight of water with respect to 100 parts by weight of durum semolina and kneading the resulting mixture. Next, the dough was rolled to a thickness of 1 cm, dried at room temperature, and pulverized until the pulverized dough passed through a sieve having a mesh size of 0.4 mm. Then, 24 parts by weight of water was added to 100 parts by weight of the pulverized dough, and the resulting mixture was kneaded to form dough again. A die having through-holes corresponding to the shape of the grooved noodle formed with three grooves and having a substantially circular configuration in cross section of the noodle string was attached to a pasta machine, from which the dough kneaded was extruded under a reduced pressure of -600 mmHg, and then the extruded noodles were dried at 45°C for 20 hours to thereby produce dried spaghetti noodles having a length of 22 cm. GV of the dried spaghetti noodles was 33%.

Dried spaghetti noodles of each of Examples 8 to 11 were obtained in the same way as in Example 3 except that a die having through-holes corresponding to the shape of each type of grooved noodle with which shape $A_1/A_0$

became the relevant value shown in Table 1 was used.

<Evaluation>

One hundred grams of each type of the spaghetti noodles was taken and put in a heat-resistant container, 300 g of water (temperature: 25°C) was added in the container, and the noodles were heat-cooked at 500 W for 6 minutes in a microwave oven. Whether or not boiling over during cooking occurred was checked. After completion of heating, the container was taken out from the microwave oven and the degree of sticking between the boiled noodles was evaluated according to the following evaluation criteria. Further, the cooked spaghetti noodles were eaten and the texture of the noodles was evaluated according to the following evaluation criteria. The results are shown in Table 1 using the averages of ten-time evaluations.

(Evaluation criteria of sticking between boiled noodles)

5 No boiled noodles stick to each other.
4 Less than 5% of the boiled noodles stick to each other.
3 Not less than 5% and less than 10% of the boiled noodles stick to each other.
2 Not less than 10% and less than 20% of the boiled noodles stick to each other.
1 Not less than 20% of the boiled noodles stick to each other.

(Evaluation criteria of texture of boiled noodle)

5 There is no unevenly heated portion, and very good texture equal to that of a spaghetti noodle which is boiled in a good manner is felt.
4 There is little unevenly heated portion, and good texture equal to that of a conventional spaghetti noodle is felt.
3 There is a slight unevenly heated portion, but texture almost equal to that of a conventional spaghetti noodle is felt.
2 There is an unevenly heated portion, and texture inferior to that of a conventional spaghetti noodle is felt.
1 There is many unevenly heated portions, and very poor texture is felt.

[Table 1]

| (Table 1) Part 1 | Comparative Example 1 | Example 1 | Example 2 | Example 3 | Example 4 | Example 5 | Example 6 |
|---|---|---|---|---|---|---|---|
| GV (%) | 16 | 18 | 20 | 22 | 29 | 32 | 35 |
| Boiling over | No | No | No | No | No | No | No |
| $A_1/A_0$ | 0.38 | 0.38 | 0.38 | 0.38 | 0.38 | 0.38 | 0.38 |
| Sticking betw een boiled noodles | 4.8 | 4.6 | 4.5 | 4.5 | 4.2 | 3.9 | 3.4 |
| Texture of boiled noodle | 1.9 | 3.0 | 3.8 | 4.3 | 4.5 | 4.1 | 3.8 |

[Table 2]

| (Table 1) Part 2 | Example 7 | Example 8 | Example 9 | Example 10 | Example 11 | Comparative Example 2 | Comparative Example 3 |
|---|---|---|---|---|---|---|---|
| GV (%) | 33 | 22 | 22 | 22 | 22 | 38 | 44 |
| Boiling over | No | No | No | No | No | Yes | Yes |
| $A_1/A_0$ | 0.38 | 0.32 | 0.42 | 0.28 | 0.47 | 0.38 | 0.38 |

(continued)

| (Table 1) Part 2 | Example 7 | Example 8 | Example 9 | Example 10 | Example 11 | Comparative Example 2 | Comparative Example 3 |
|---|---|---|---|---|---|---|---|
| Sticking between boiled noodles | 3.5 | 4.3 | 4.4 | 3.8 | 3.4 | 2.1 | 1.4 |
| Texture of boiled noodle | 3.9 | 4.2 | 4.1 | 3.9 | 3.5 | 2.9 | 2.3 |

• Examples 12 to 17 and Comparative Examples 4 and 5

Dried spaghetti noodles of Examples 12 to 17 and Comparative Examples 4 and 5 were produced in the same manner as Examples 1 to 6 and Comparative Examples 1 and 2, respectively, except that the raw noodles were dried at 45°C for 20 hours instead of being dried by a conventional method. The noodles were evaluated in the same manner as above. The results are shown in Table 2.

[Table 3]

| (Table 2) | Comparative Example 4 | Example 12 | Example 13 | Example 14 | Example 15 | Example 16 | Example 17 | Comparative Example 5 |
|---|---|---|---|---|---|---|---|---|
| GV (%) | 16 | 18 | 20 | 22 | 29 | 32 | 35 | 38 |
| Boiling over | No | No | No | No | No | No | No | Yes |
| $A_1/A_0$ | 0.38 | 0.38 | 0.38 | 0.38 | 0.38 | 0.38 | 0.38 | 0.38 |
| Sticking between boiled noodles | 4.7 | 4.6 | 4.5 | 4.4 | 4.5 | 4.1 | 3.5 | 2.2 |
| Texture of boiled noodle | 1.7 | 3.0 | 3.7 | 4.2 | 4.5 | 4.2 | 3.7 | 3.1 |

• Reference Example

Dried spaghetti noodles having no groove were produced in the same manner as Comparative Example 3 except that instead of the die having a through-holes corresponding to the shape of the grooved noodles formed with three grooves and having a substantially circular configuration in cross section of the noodle string, a die having through-holes of circular shape having the same diameter as that of the substantially circular configuration in the above cross-sectional shape is used, and the noodles were evaluated in the same manner as above. As a result, sticking between the boiled noodles was 3.1 and texture of the boiled noodles was 3.5.

**Claims**

1. A grooved noodle having a groove or a plurality of grooves formed along a longitudinal direction of a noodle string and having a substantially circular configuration in cross section of the noodle string, wherein only grain flour including wheat flour is used as raw material flour, and a gluten vitality of the grooved noodle is 18% to 35%.

2. The grooved noodle according to claim 1, wherein the number of the grooves is 2 to 8.

3. The grooved noodle according to claim 1 or 2, wherein an area ratio of a cross-sectional area of the groove or the plurality of grooves to a cross-sectional area of the configuration in cross section in a direction orthogonal to the longitudinal direction of the noodle string is 0.25 to 0.50.

4. A method for producing the grooved noodle according to any one of claims 1 to 3, comprising:

   a forming step of obtaining, from dough made from only grain flour including wheat flour as a raw material, a grooved raw noodle having a groove or a plurality of grooves formed along a longitudinal direction of a noodle string and having a substantially circular configuration in cross section of the noodle string; and
   a heating step of heating the grooved raw noodle to obtain a grooved noodle whose gluten vitality is 18% to 35%.

5. The method for producing the grooved noodle according to claim 4, further comprising a step of adjusting a water content of the grooved raw noodle before the heating step.

6. The method for producing the grooved noodle according to claim 5, wherein the step of adjusting the water content includes a drying step.

7. A method for cooking a grooved noodle, comprising: putting the grooved noodle according to any one of claims 1 to 3 and water in a container; and heating the grooved noodle and the water with microwaves to obtain a boiled noodle.

8. The method for cooking a grooved noodle according to claim 7, wherein a temperature of the water is 0°C to 40°C.

## INTERNATIONAL SEARCH REPORT

| International application No. |
|---|
| PCT/JP2018/018319 |

A.  CLASSIFICATION OF SUBJECT MATTER
Int.Cl.  A23L7/109(2016.01)i

According to International Patent Classification (IPC) or to both national classification and IPC

B.  FIELDS SEARCHED

Minimum documentation searched (classification system followed by classification symbols)
Int.Cl.  A23L7/109

| Documentation searched other than minimum documentation to the extent that such documents are included in the fields searched | |
|---|---|
| Published examined utility model applications of Japan | 1922–1996 |
| Published unexamined utility model applications of Japan | 1971–2018 |
| Registered utility model specifications of Japan | 1996–2018 |
| Published registered utility model applications of Japan | 1994–2018 |

Electronic data base consulted during the international search (name of data base and, where practicable, search terms used)
MEDLINE/CAplus/BIOSIS/FSTA/EMBASE/WPIDS (STN)
JSTPlus/JMEDPlus/JST7580 (JDreamIII)

C.  DOCUMENTS CONSIDERED TO BE RELEVANT

| Category* | Citation of document, with indication, where appropriate, of the relevant passages | Relevant to claim No. |
|---|---|---|
| Y | WO 2008/090802 A1 (NISSHIN FOODS INC.) 31 July 2008, entire text, in particular, see claims 1, 7, paragraphs [0009], [0054], [0092], [0096], [0097], [0100], [0101] & EP 2127537 A1, claims 1, 7, paragraphs [0009], [0054], [0092], [0096], [0097], [0100], [0101] & US 2010/0080882 A1 | 1–8 |

☒   Further documents are listed in the continuation of Box C.　　☐   See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 27 June 2018 (27.06.2018) | 17 July 2018 (17.07.2018) |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

## INTERNATIONAL SEARCH REPORT

International application No.

PCT/JP2018/018319

### C (Continuation). DOCUMENTS CONSIDERED TO BE RELEVANT

| Category* | Citation of document, with indication, where appropriate, of the relevant passages | Relevant to claim No. |
|---|---|---|
| Y | LAMACCHIA, C. et al., "Changes in pasta proteins induced by drying cycles and their relationship to cooking behavior", J. Cereal Sci., 2007, vol.46, pp. 58-63, entire text, in particular, see page 58, abstract, page 60, left column 2.4., page 61, right column, the last paragraph, lines 16-18, page 62, left column, the last line to right column, line 2 | 1-8 |
| Y | ZWEIFEL, C. et al., "Influence of High-Temperature Drying on Structural and Textural Properties of Durum Wheat Pasta", Cereal Chem., 2003, vol. 80, no. 2, pp. 159-167, entire text, in particular, see page 159, abstract, page 161, left column, lines 18-22, fig. 3, page 162, right column, the last paragraph, lines 1-3, 11-14, page 165, right column, lines 24-27 | 1-8 |
| Y | AKTAN, B., KHAN, K., "Effect of High-Temperature Drying of Pasta on Quality Parameters and on Solubility, Gel Electrophoresis, and Reversed-Phase High-Performance Liquid Chromatography of Protein Components", Cereal Chem., 1992, vol. 69, no. 3, pp. 288-295, entire text, in particular, see page 288, abstract, left column, the last line, lines 1-8, page 289, right column, Protein Fractionation, lines 2-7, page 291, right column, the last paragraph, lines 3-6 | 1-8 |
| A | JP 63-248366 A (NISSHIN FLOUR MILLING INC.) 14 October 1988, entire text, in particular, see claims, page 2, lower right column, lines 4-7 (Family: none) | 1-8 |
| A | JP 9-154514 A (MAMAA MAKARONI KK) 17 June 1997, entire text, in particular, see claim 1, paragraph [0003] (Family: none) | 1-8 |
| A | JP 60-6172 A (NISSHIN FLOUR MILLING INC.) 12 January 1985, entire text, in particular, see claim 1 (Family: none) | 1-8 |
| A | JP 5-244886 A (NISSHIN FLOUR MILLING INC.) 24 September 1993, entire text, in particular, see claim 1 (Family: none) | 1-8 |
| A | JP 2001-17104 A (SHOWA SANGYO CO., LTD.) 23 January 2001, entire text, in particular, see claim 1 (Family: none) | 1-8 |
| A | CUBADDA, R. E. et al., "Influence of Gluten Proteins and Drying Temperature on the Cooking Quality of Durum Wheat Pasta", Cereal Chem., 2007, vol. 84, no. 1, pp. 48-55, entire text, in particular, see page 48, abstract | 1-8 |

Form PCT/ISA/210 (continuation of second sheet) (January 2015)

**INTERNATIONAL SEARCH REPORT**

| International application No. |
| --- |
| PCT/JP2018/018319 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | STEFANIS, E. DE, SGRULLETTA, D., "Effects of High-temperature Drying on Technological Properties of Pasta", J. Cereal Sci., 1990, vol. 12, pp. 97-104, entire text, see page 97, abstract | 1-8 |
| A | 川田可南子ら, 各種市販パスタの破断特性と澱粉糊化特性へのグルテン構造の影響, 日本食品科学工学会大会講演要旨集, 2009, the 56th, p. 115:3Ia7, entire text, non-official translation (KAWADA, Kanako et al. "Effects of gluten structure on rupture properties and starch gelatinization properties in various commercialized pasta", Lecture abstracts of meeting of the Japanese Society for Food Science and Technology) | 1-8 |

Form PCT/ISA/210 (continuation of second sheet) (January 2015)

**EP 3 622 830 A1**

**Patent documents cited in the description**

- JP 2001017104 A
- JP 2011162200 A